# EUROPEAN PATENT SPECIFICATION

(11) **EP 1 079 319 B1**
(45) Date of publication and mention of the grant of the patent: **08.10.2008**
(21) Application number: 00480056.1
(22) Date of filing: 28.06.2000
(51) Int. Cl.: G06F 17/24

(54) **Method and system for extending a named range in a spreadsheet**
Verfahren und System zur Erweiterung eines gennanten Zellenbereichs in einem Tabellenblatt
Procédé et système pour élargir une région designé de cellules dans un tableur

(30) Priority: 20.08.1999 EP 99480078
(43) Date of publication of application: 28.02.2001
(73) Proprietor: International Business Machines Corporation, Armonk, NY 10504 (US)
(72) Inventor: Bauchot, Frédéric, 06640 St Jeannet (FR); Harrari, Albert, 06100 Nice (FR)
(74) Representative: Etorre, Yves Nicolas

(56) References cited:
- US-A- 5 742 835
- DAVISON ET AL.: "Dynamic name range?" GOOGLE GROUPS, [Online] 22 April 1999 (1999-04-22), - 24 April 1999 (1999-04-24) XP002444184 microsoft.public.excel.misc Retrieved from the Internet: URL:http://groups.google.com/group/microso ft.public.excel.misc/browse_thread/thread/ 913e907554e90778/1b9d3590c702e03d?lnk=gst& q=excel+dynamic+range+name+daniel&rnum=1&h l=en#1b9d3590c702e03d> [retrieved on 2007-07-25]

## Description

### Technical field of the invention

The present invention relates to the field of information processing by digital computers, more particularly to a method and system, in an electronic spreadsheet, for defining and processing a cell named range which can be extended by the introduction of new elements (like rows, columns, or pages) outside but in the immediate vicinity of the named range.

### Background art

Before computers, numerical analyses, particularly financial ones, were usually prepared on an accountant's columnar pad or spreadsheet, with pencil and calculator in hand. By organizing data into columns and rows, spreadsheets afford the rapid assimilation of information by a reader. The task of preparing a spreadsheet on paper, however, is not quite so fast. Instead, the process tends to be very slow, as each entry must be tediously calculated and entered into the spreadsheet. Since all calculations are the responsibility of the preparer, manually prepared spreadsheets are also prone to errors. Hence, preparation of spreadsheets by hand is slow, tedious, and unreliable.

With the advent of microcomputers, a solution was forthcoming in the form of "electronic spreadsheets." Better known simply as "spreadsheets," these software programs provide a computerized replacement for the traditional financial modelling tools: the accountant's columnar pad, pencil, and calculator. In some regards, spreadsheet programs are to those tools what word processors are to typewriters. Spreadsheets offer dramatic improvements in ease of creating, editing, and using financial models.

A typical spreadsheet program configures the memory of a computer to resemble the column/row or grid format of an accountant's columnar pad, thus providing a visible calculator for a user. Because this "pad" exists dynamically in the computer's memory, however, it differs from paper pads in several important ways. Locations in the electronic spreadsheet, for example, must be communicated to the computer in a format which it can understand. A common scheme for accomplishing this is to assign a number to each row in a spreadsheet, a letter to each column, and another letter to each sheet (or page) of the spreadsheet. To reference a location at column A and row 1 of the second page (i.e., the upper-lefthand corner), for example, the user types in "B:A1". In this manner, the spreadsheet defines an addressable storage location or "cell" at each intersection of a row with a column within a given page.

Data entry into an electronic spreadsheet occurs in much the same manner that information would be entered on an accountant's pad. After a screen cursor is positioned at a desired location, the user can enter alphanumeric information. Besides holding text and numeric information, however, spreadsheet cells can store special instructions or "formulas" specifying calculations to be performed on the numbers stored in spreadsheet cells. Such spreadsheet cells can also be defined and named as a range as long as they are arranged as a connex set of cells. A typical example of such a named range simply corresponds to a regular table found in an accountant's pad. In this fashion, range names can serve as variables in an equation, thereby allowing precise mathematical relationships to be defined between cells. The structure and operation of a spreadsheet program, including advanced functions such as functions and macros, are documented in the technical, trade, and patent literature. For an overview, see e.g., Cobb, *S.*, *Using Quattro Pro 2,* Borland-OsbomeIMcGraw-Mll, 1990; and LeBlond, G. and Cobb, D., *Using* 1-2-3, Que corp., 1985. The disclosures of each of the foregoing are hereby incorporated by reference.

Electronic spreadsheets offer many advantages over their paper counterparts. For one, electronic spreadsheets are much larger (i.e., hold more information) than their paper counterparts; electronic spreadsheets having thousands or even millions of cells are not uncommon. Spreadsheet programs also allow users to perform "what-if" scenarios. After a set of computational relationships has been entered into a worksheet, thanks to imbedded formulas for instance, the spread of information can be recalculated using different sets of assumptions, with the results of each recalculation appearing almost instantaneously. Performing this operation manually, with paper and pencil, would require recalculating every relationship in the model with each change made. Thus, electronic spreadsheet systems were invented to solve "what-if' problems, that is, changing an input and seeing what happens to an output.

Named ranges used to automate the computations in a spreadsheet can evolve during the "life" of a spreadsheet just as some entries may be added to or deleted from a classical table found in an accountant's pad. Conventional spreadsheet tools offer some means for automatically adjusting the content of an existing named range when new elements (typically a new column, a new row or a new sheet) are added between elements already pertaining to the named range, or when some elements (typically a column, a row or a sheet) already pertaining to the named range are deleted. The relative location within the named range where new elements are added is commonly the choice of the spreadsheet user, motivated by his own criteria, such as for instance some sorting criteria. If the spreadsheet user decides to add to an existing named range some new elements just below the bottom one, or just above the first one, then conventional spreadsheets do not automatically update the named range because the new introduced elements are not located between two elements pertaining to the named range. This limitation can be quite cumbersome in the frequent case where elements of a table are horizontally sorted by date, so that a new (recent) element of the named range must be commonly added by the introduction of a new row just below the last one of the named range.

### Summary of the invention

An object of the present invention is to automatically adjust the limits of a named range for adding new elements (row, or column, or sheet) which are not located between two elements already pertaining to the named range, but in the immediate vicinity of an element pertaining to the named range.

The present invention relates to a method and system for processing a named range defined by a cell address range in a spreadsheet comprising a plurality of cells identified in each dimension by an address, each dimension comprising two directions. The method comprises the steps of:
- defining an open named range by specifying to the named range one or a plurality of open directions;
- defining a hidden named range with the cell address range of the open named range expanded by one address in every direction specified as open.

In response to an user action, the method comprises the further steps of:
- selecting one or a plurality of directions;
- increasing the cell address range of the hidden named range by inserting between two consecutive cell addresses, a new address in selected directions;
- updating the open named range with the cell address range of the hidden named range shortened by one address in every direction specified as open.

### Brief description of the drawings

The novel and inventive features believed characteristics of the invention are set forth in the appended claims. The invention itself, however, as well as a preferred mode of use, further objects and advantages thereof, will best be understood by reference to the following detailed description of an illustrative detailed embodiment when read in conjunction with the accompanying drawings, wherein :
- Figure **1A** is a block diagram of a computer system in which the present invention may be embodied.
- Figure **1B** is a block diagram of a software system including an operating system, an application software, and a user interface for carrying out the present invention.
- Figure **1C** illustrates the basic architecture and functionality of a graphical user interface in which the present invention may be embodied.
- Figure **2A** shows a spreadsheet notebook interface according to the preferred embodiment of the present invention.
- Figure **2B** shows the toolbar component of the notebook interface shown in Figure **2A**.
- Figures **2C** and **2D** show page identifiers for rapidly accessing and manipulating individual pages of the notebook interface shown in Figure **2A**.
- Figure **3** illustrates the structure of the Open Table according to the preferred embodiment of the present invention.
- Figure **4** is a flow chart illustrating a preferred method for specifying how a given named range can take advantage of the present invention.
- Figure **5** is a flow chart illustrating a preferred method for updating an open named range upon the introduction of new elements (row or column or sheet) according to the present invention.

### Detailed description of the preferred embodiment

### SYSTEM HARDWARE

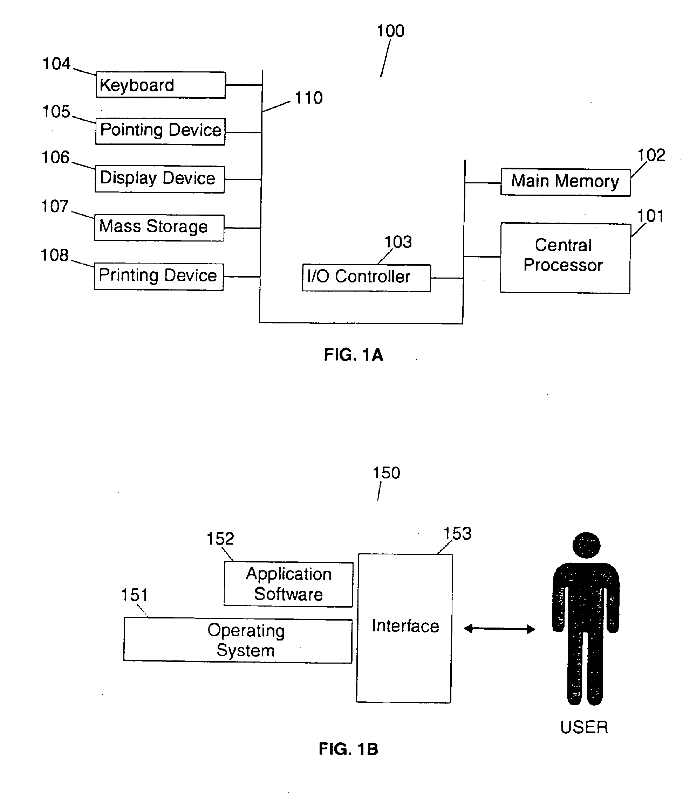

As shown in FIG. **1A**, the present invention may be embodied on a computer system **100** comprising a central processor **101**, a main memory **102**, an input/output controller **103**, a keyboard **104**, a pointing device **105** (e.g., mouse, track ball, pen device, or the like), a display device **106**, and a mass storage **107** (e.g., hard disk). Additional input/output devices, such as a printing device **108**, may be included in the system **100** as desired. As illustrated, the various components of the system **100** communicate through a system bus **110** or similar architecture. In a preferred embodiment, the computer system **100** includes an IBM-compatible personal computer, which is available from several vendors (including International Business Machine - IBM Corporation of Armonk, N.Y.).

Illustrated in FIG. **1B**, a computer software system **150** is provided for directing the operation of the computer system **100.** Software system **150**, which is stored in system memory **102** and on disk memory **107**, includes a kernel or operating system **151** and a shell or interface **153.** One or more application programs, such as application software **152**, may be "loaded' (i.e., transferred from storage **107** into memory **102**) for execution by the system **100.** The system **100** receives user commands and data through user interface **153;** these inputs may then be acted upon by the system **100** in accordance with instructions from operating module **151** and/or application module **152**. The interface **153**, which is preferably a graphical user interface (GUI), also serves to display results, whereupon the user may supply additional inputs or terminate the session. In a preferred embodiment, operating system **151** and interface **153** are Microsoft Win95, available from Microsoft Corporation of Redmond, Wash. Application module **152**, on the other hand, includes a spreadsheet notebook of the present invention as described in further detail herein below.

### INTERFACE

### A. Introduction

The following description will focus on the presently preferred embodiments of the present invention, which are embodied in spreadsheet applications operative in the Microsoft Win95 environment. The present invention, however, is not limited to any particular application or any particular environment. Instead, those skilled in the art will find that the system and methods of the present invention may be advantageously applied to a variety of system and application software, including database management systems, word processors, and the like. Moreover, the present invention may be embodied on a variety of different platforms, including Macintosh, UNIX, NextStep, and the like. Therefore, the description of the exemplary embodiments which follows is for purposes of illustration and not limitation.

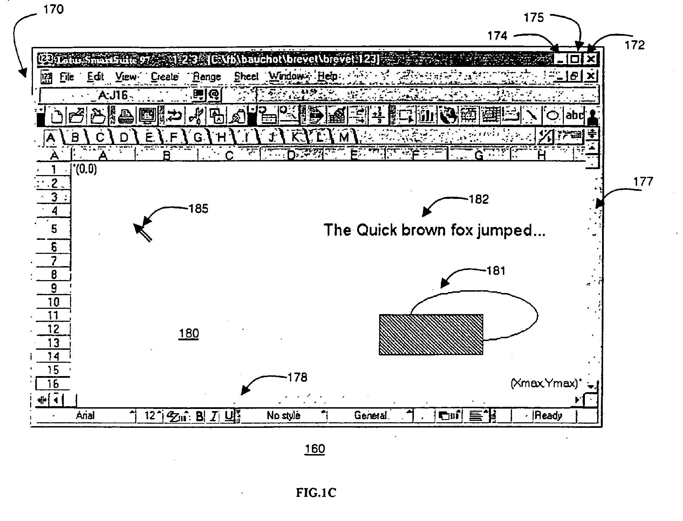

Referring now to FIG. **1C**, the system **100** includes a windowing interface or workspace **160**. Window **160** is a rectangular, graphical user interface (GUI) for display on screen **106**; additional windowing elements may be displayed in various sizes and formats (e.g., tiled or cascaded), as desired. At the top of window **160** is a menu bar **170** with a plurality of user-command choices, each of which may invoke additional submenus and software tools for use with application objects. Window **160** includes a client area **180** for displaying and manipulating screen objects, such as graphic object **181** and text object **182**. In essence, the client area is a workspace or viewport for the user to interact with data objects which reside within the computer system **100.**

Windowing interface **160** includes a screen cursor or pointer **185** for selecting and otherwise invoking screen objects of interest. In response to user movement signals from the pointing device **105**, the cursor **185** floats (i.e., freely moves) across the screen **106** to a desired screen location. During or after cursor movement, the user may generate user-event signals (e.g., mouse button "clicks" and "drags") for selecting and manipulating objects, as is known in the art. For example, Window **160** may be closed, resized, or scrolled by "clicking" (selecting) screen components **172, 174/5,** and **177/8,** respectively.

In a preferred embodiment, screen cursor **185** is controlled with a mouse device. Single-button, double-button, or triple-button mouse devices are available from a variety of vendors, including Apple Computer of Cupertino, Calif., Microsoft Corporation of Redmond, Wash., and Logitech Corporation of Fremont, Calif., respectively. More preferably, screen cursor control device **105** is a two-button mouse device, including both right and left "mouse buttons."

Programming techniques and operations for mouse devices are well documented in the programming and hardware literature; see e.g., *Microsoft Mouse Programmer's Reference,* Microsoft Press, 1989. The general construction and operation of a GUI event-driven system, such as Windows, is also known in the art: see, e.g., Petzold, C., *Programming Windows,* Second Edition, Microsoft Press, 1990. The disclosures of each are hereby incorporated by reference.

### B. Preferred interface

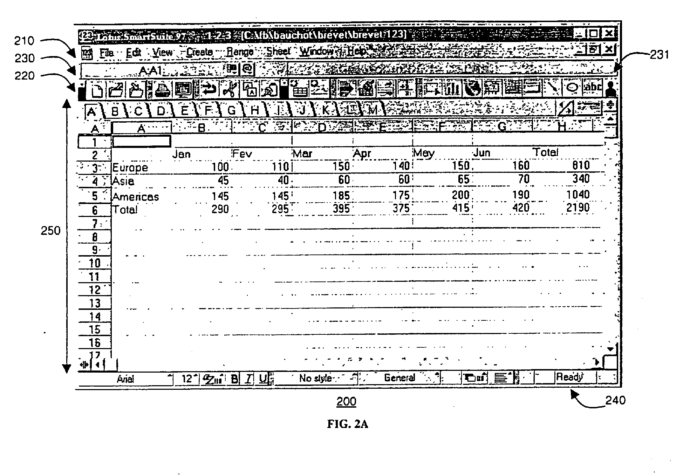

Shown in FIG. **2A**, a spreadsheet notebook interface of the present invention will now be described The spreadsheet notebook or workbook of the present invention includes a notebook workspace **200** for receiving, processing, and presenting information, including alphanumeric as well as graphic information. Notebook workspace **200** includes a menu bar **210,** a toolbar **220**, a current cell indicator **230,** an input line **231**, a status line **240,** and a notebook window **250.** The menu bar **210** displays and invokes, in response to user inputs, a main level of user commands. Menu **210** also invokes additional pull down menus, as is known in windowing applications. Input line **231** accepts user commands and information for the entry and editing of cell contents, which may include data, formulas, macros, and the like. Indicator **230** displays an address for the current cursor (i.e., active cell) position, or the address or name of a selected named range (i.e. active selection). At the status line **240,** system **100** displays information about the current state of the workbook; for example, a "READY" indicator means that the system is ready for the user to select another task to be performed.

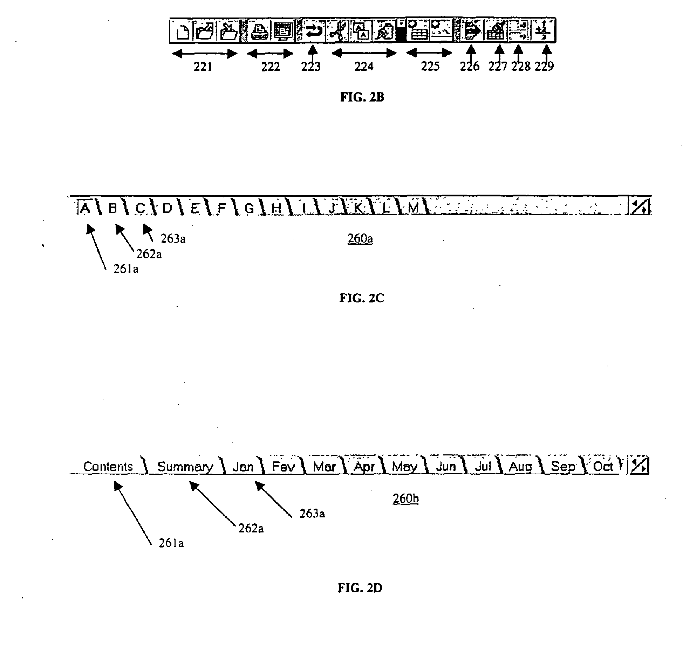

The toolbar **220,** shown in further detail in FIG. **2B**, comprises a row or palette of tools which provide a quick way for the user to choose commonly-used menu commands or properties. In an exemplary embodiment, toolbar **220** includes file manipulation buttons **221**, printing buttons **222**, an undo button **223,** cut, copy, and paste buttons **224**, information pop-up window buttons tool **225**, a named range selection button **226,** a style copy button **227**, a column resizing button **228**, and a sum button **229**. The functions of these buttons are suggested by their names. For instance, buttons **224** cut, copy and paste data and objects to and from Windows' clipboard. The same actions are also available as corresponding commands in the Edit menu (available from menu bar **210**).

The notebook, which provides an interface for entering and displaying information of interest, includes a plurality of spreadsheet pages. Each page may include conventional windowing features and operations, such as moving, resizing, and deleting. In a preferred embodiment, the notebook includes 256 spreadsheet pages, all of which are saved as a single disk file on the mass storage **107**. Workspace **200** may display one or more notebooks, each sized and positioned (e.g., tiled, overlapping, and the like) according to user-specified constraints.

Each spreadsheet page of a notebook includes a 2-D spread. Page A from the notebook **200,** for example, includes a grid in row and column format, such as row 3 and column F. At each row/column intersection, a box or cell (e.g., cell **C4**) is provided for entering, processing, and displaying information in a conventional manner. Each cell is addressable, with a selector being provided for indicating a currently active one (i.e., the cell that is currently selected).

As shown in FIGS. **2C****-D**, individual notebook pages are identified by page identifiers **260,** preferably located along one edge of a notebook. In a preferred embodiment, each page identifier is in the form of a tab member (e.g., members **261a, 262a, 263a**) situated along a top edge of the notebook. Each tab member may include representative indicia, such as textual or graphic labels, including user selected titles representing the contents of a corresponding page. In FIG. **2C**, the tab members **260** are set to their respective default names. For example, the first three tab members (members **261a, 262a, 263a**) are respectively set to A, B, and C. Tab members are typically given descriptive names provided by the user, however. As shown in FIG. **2D**, for example, the first three tab members have now been set to "Contents" (tab member **261b**), "Summary" (tab member **262b**), and "Jan" (tab member **263b**). In a similar manner, the remaining tabs are set to subsequent months of the year. In this manner, the user associates the page identifiers with familiar tabs from an ordinary paper notebook. Thus, the user already knows how to select a page or spread of interest: simply select the tab corresponding to the page (as one would do when selecting a page from a paper notebook).

In addition to aiding in the selection of an appropriate page of information, the user-customizable page identifiers serve aid in the entry of spreadsheet named range addresses. For example, when entering a formula referring to a named range of cells on another page, the user may simply use the descriptive page name in the named range address, thus making it easier for the user to understand the relationship of the cell(s) or information being referenced.

A general description of the features and operation of the spreadsheet notebook interface may be found in Quattro Pro for Windows *(Getting Started, User's Guide and Building* *Spreadsheet Applications),* available from Borland International.

### MANAGEMENT OF NAMED RANGES

### A. Introduction

As the power of spreadsheet environments has increased since several years, it is today possible to develop complex custom applications solely based on spreadsheets, as opposed to applications developed with general purpose programming languages like C++ or VisualBasic from Microsoft Corporation. This can be achieved thanks to the spreadsheet imbedded tools such as macro languages, script languages and formulas which all manipulate spreadsheet named ranges, whatever these named ranges correspond to single elements of information (a single cell named range), or to multiple elements of information (a complex named range).

In typical spreadsheet based applications, it is common to find tables whose content (or a subset of it) is declared as a named range. Defining such named ranges makes easy to retrieve information from the table, for instance by using database oriented functions which are able to perform some computations (summing, averaging for instance) for the table entries matching a given set of criteria. When new elements are added **within** the named range, conventional spreadsheet programs automatically update the named range definition accordingly. With conventional notations, let assume that a range named "CUSTOMER" is defined as A:C3..A:H33. This named range corresponds, on the first sheet A, to the intersection of the 31 rows from 3 to 33 included with the 6 columns from C to H included. Let also assume that each row of this named range logically corresponds to a given customer whose characteristics (name, address, telephone, etc..) are recorded between columns C to H. If a new customer must be added to the CUSTOMER named range, let assume that a new row is inserted between line 23 and line 24, just because the alphabetic order requires to place it there. As the new introduced row falls within the interval [3 33] which is the projection of the named range on the row axis, then the conventional spreadsheet program will automatically adjust the CUSTOMER named range definition which becomes A:C3..A:H34. Indeed the rows 24 to 33 are pushed down by one position (and thus become the rows 25 to 34), leaving in row 24 an empty place where the new row can be inserted.
Now, if the new customer is the company "ZZZ Ltd", the new row to be added will likely be after the row 34, to follow the alphabetic order. In this case the conventional spreadsheet programs will effectively add a new row between the old rows 34 and 35, but the CUSTOMER named range will still correspond to A:C3..A:H33. Indeed the new introduced row is not located within the interval [3 33], but at the immediate edge of it. The absence of CUSTOMER named range update may result in wrong information returned by macros, functions, or whatever means based on the definition of the CUSTOMER named range. The present invention offer a user-friendly solution to this problem by allowing the definition of named ranges which can be automatically "extended" when introducing in the spreadsheet new elements having a single common edge with the named range.

### B. Improved Named Range Manager

In contrast to just-described conventional tools, the present invention provides a more powerful, user-friendly and interactive approach for managing the definition and update of named cell ranges in a form of a named range manager. The manager automatically allows the spreadsheet user to define if and how a named range must behave as a so-called ***"open named range"*** (as opposed to conventional ***"closed named range").***

The present invention is directed to a method and system for defining and managing within a spreadsheet a new type of named range, referred to in the following as an *"open named range",* as opposed to classical named ranges referred to as *"closed named ranges".*
- **Closed Named Range**: In typical spreadsheet programs organised as a 3D (three dimensions) set of cells (the three axis being the row axis, the column axis and the sheet axis), a closed named range can be formally defined as the intersection of three non-empty sets of contiguous elements along each axis. With conventional notations, the range named "MY_TABLE" with address C:E10..C:K18 corresponds to the intersection of the set of the cells whose row is between 10 and 18 included, with the set of cells whose column is between E and K included, and with the set of cells whose sheet is between C and C included. Adding a new row between row 10 and 18, or a new column between column E and K will result in a redefinition of the closed range named MY_TABLE.
- **Open Named Range:** Open named ranges can also be defined like closed named ranges as the intersection of three non-empty sets of contiguous elements along each axis, but their behaviour differs when new elements are added on one of the three axis. Indeed with the previous named range example, if this named range is defined as open, then adding a new row between row 9 and 19 included, or a new column between column D and L, or a new sheet between sheet B and sheet D included will result in a redefinition of the closed named range MY_TABLE.

When a named range is defined as open, its behaviour upon the introduction of new elements along one of the three axis of conventional spreadsheet programs, will depend on the *"directions"* along which the named range is defined as open. With 3D conventional spreadsheets, 6 different directions can be defined, two per axis: the right and left directions along the row axis, the up and down directions along the column axis, and the forward and backward directions along the sheet axis. In the previous example of the open range named MY_TABLE (C:E10..C:K18), this named range was in fact open in all the six directions. If this same named range were open only on the bottom direction, then it would differ from a classical closed named range when new rows are added just below the bottom row of the named range. Identically, if this same named range were open only on the right direction, then it would differ from a classical closed named range when new columns are added just on the right of the rightmost column of the named range. For any direction where the named range is declared as open, the introduction of a new set of elements along this direction will affect the definition of the named range if and only if the new set of elements has at least a single common boundary with the defined open named range. By combining different directions along which the named range is defined as open, different behaviour can be achieved on different directions.

### C. Open Named Ranges

In a preferred embodiment, named ranges can be specified as open in any of the six following directions: the right and left directions along the row axis, the up and down directions along the column axis, and the forward and backward directions along the sheet axis. When selected, open named ranges can be easily identified on the display device **106** within the work area **180** of the window **160** by using some specific cell attributes, such as a font style or font colour or background colour, etc... In a preferred embodiment, the background colour of a selected open named range is set to black (as for conventional closed named ranges), but in addition the background colour of the border cells in the direction where the named range is open is in blinking mode.

In a preferred embodiment, the present invention is used in two steps :
- **1. The first step** occurs when the spreadsheet user decides, based on some criteria not detailed here, whether a given named range deserves to take advantage of the cell content manager or not.
   - The user first selects the relevant named range by using the pointing device **105** or the keyboard **104** and then invokes a specific command called ***"Open_Range"*** thanks to conventional means available in spreadsheet environment, such as (but not limited to) dedicated push-buttons, keyboard entry short cuts, menu or submenu entries. For each of the six directions introduced above (right, left, up, down, forward, backward), the user specifies if the selected named range is open or not. At completion of the Open_Range command, the selected named range background colour is set to blinking mode in the directions where it has been turned as open. This same command can also be used to update the definition of a named range already specified as open in some directions.
   - During the execution of the Open_Range command, the spreadsheet program updates an internal table called the "Open Table", aimed to record in which directions the named range has been specified as open. This Open Table also records the definition of "hidden" closed named ranges uniquely associated to every open named range.
- **2. The second step** occurs when the user introduces new elements (rows, or columns, or sheets) in the spreadsheet by using conventional means. Conventional spreadsheet programs invokes internal routines aimed to adjust the definition of all the closed named ranges impacted by the introduction of the new elements. During the execution of this conventional routine, all the defined closed named ranges (including the ones defined by the user, but also the hidden ones recorded in the Open Table) are updated if the newly introduced elements are located **within** their boundaries. With the present invention, the spreadsheet program invokes in addition a specific internal routine referenced to as **"*Update Open Range*"** which further adjusts the definitions of the open named ranges according to the directions along which they have been specified as open.

### D. Open Table

The decision to specify which directions of a named range will behave as open or closed belongs to the spreadsheet application user. A single repository, called *"Open Table",* is used to record this information. This Open Table is preferably saved on a non volatile memory (typically but not necessary as part of the spreadsheet disk file on the mass storage **107**).

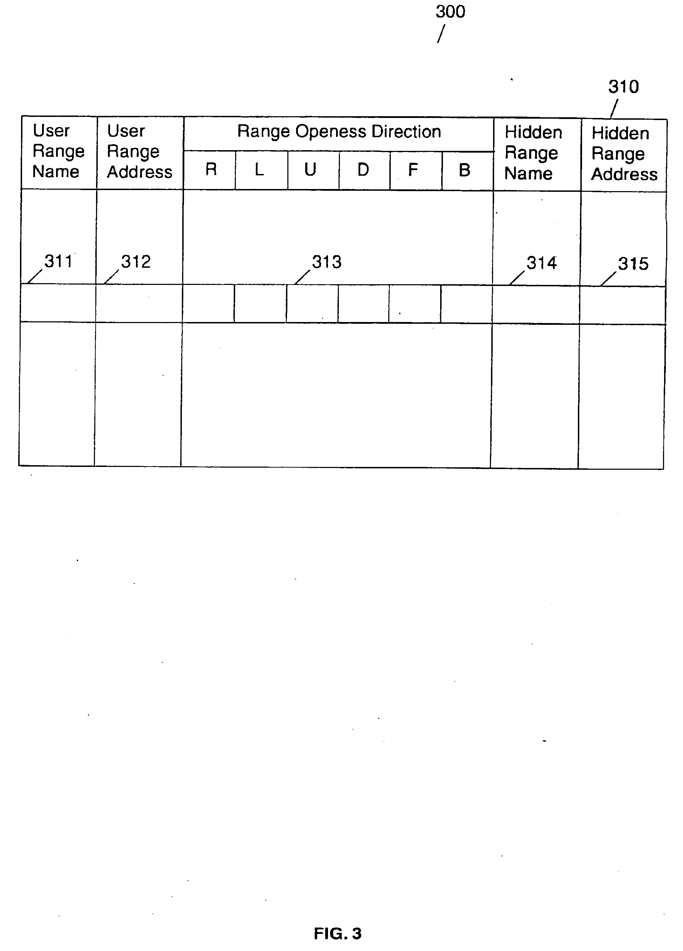

Referring now to FIG. **3**, the Open Table **300** corresponds to a logical simple structure made of several records **310**, each of them associated with an open named range. Each record includes five fields:
- The ***"User* Range Name"** field **311** is used for recording the name given by the spreadsheet user to the open named range. For instance, the User Range Name field will contain the character string "CUSTOMER" in the example given above.
- The ***"User Range Address"*** field **312** records the address of the open named range, as specified by the user. For instance, the User Range Address field can correspond to the conventional address structure Startsheet:StartrowStartcolumn..Endsheet:EndrowEndcolumn which writes as A:C3..A:H33 in the same above example.
- The ***"Range Openess Direction"*** field **313** records in which direction the named range is open. In a preferred embodiment of the invention, this field corresponds to a structure of 6 sub-fields, each of them associated to a given direction (right, left, up, down, forward and backward). For each of this subfields, a Boolean variable indicates if the associated direction is open or not for the current open named range.
- The ***"Hidden Range Name"*** field **314** is used to record the name of an internal named range, not visible to the spreadsheet user, which is used as part of this invention.
- The ***"Hidden Range Address"*** field **315** records the address of the internal named range whose name is recorded in the previous field. For instance, the Hidden Range Address field can correspond to the conventional address structure Startsheet:StartrowStartcolumn..Endsheet:EndrowEndcolumn.

It is important to notice that the present invention mainly relies on the relation established between the user defined open named range and the hidden closed named range. Both of them have the attributes of a conventional closed named range in the sense that they are automatically adjusted by conventional means when a new element falling within their boundaries is introduced. In addition the open named ranges benefit from the present invention in the sense that they are also automatically adjusted when a new element falling at the edge of their boundaries is introduced.

In the preferred embodiment, the Open Table is explicitly included within the spreadsheet file itself, but other obvious implementations can instead rely on other means.

### E. Open_Range method

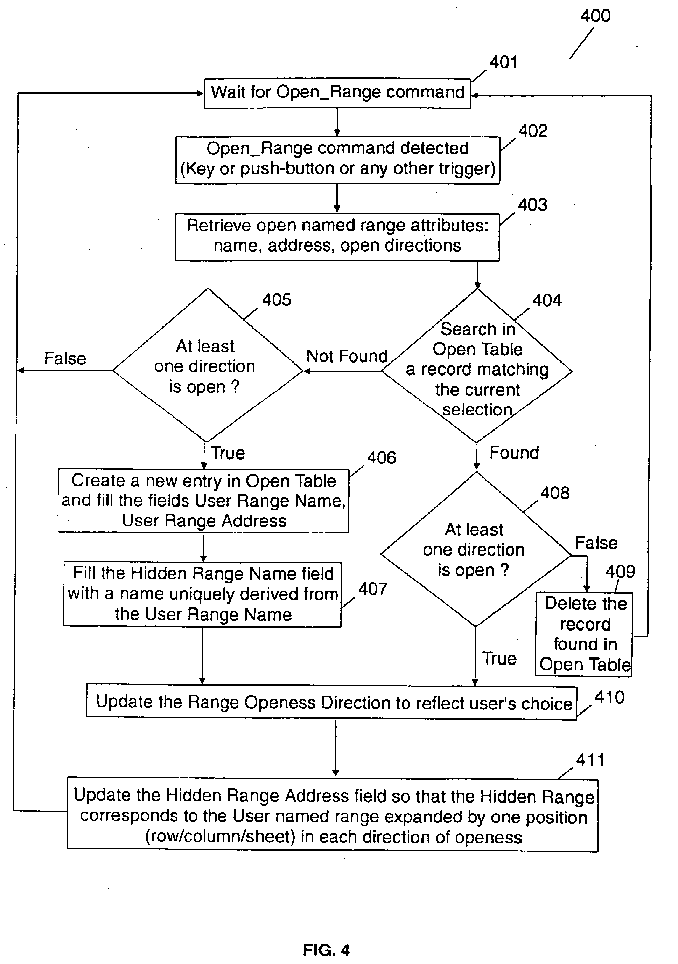

The method for enabling or disabling a given named range to take advantage of the present invention is summarized in flowchart **400** of FIG **4**. This method can be seen as the processing of the *"Open_Range"* command. The method comprises the following steps :
- At step **401**, the method is in its default state, waiting for an event to initiate the process.
- At step **402**, an event is detected, as a result of a user action. This action can be for instance a specific combination of key on the keyboard **104**, or the click of the pointing device **105** on a specific button, or any other similar means not further specified here.
- At step **403,** the different attributes of the open named range are retrieved by using conventional user-interface means, such as but not limited to navigation with the pointing device **105** within menus and sub-menus, or some specific combination of keys on the keyboard **104.**
- Step **404** corresponds to a search in the Open Table to determine if the specified open named range has already been previously declared, and then recorded in this table. In a preferred embodiment of the present invention, the search criteria corresponds to the name of the open named range, as recorded in the field **311** within a record **310** of the Open Table. If such a matching record **310** is found in the Open Table, then control is given to step **408**, otherwise control is given to step **405.**
- At step **405**, a test is done to verify that at least one direction has been specified as open during step **403.** If it is the case, control is given to step **406**; other wise the Open_Range command terminates without any update in the Open Table, and control is given back to step **401** for waiting for any further Open_Range command.
- At step **406**, a new record **310** is created in the Open Table, and the corresponding fields User Range Name **(311)** and User Range Address **(312)** are initialized to the named and address of the current open named range, as learned during the step **403.**
- At step **407**, the field Hidden Range Name **(314)** is filled with a name which is uniquely derived from the User Name Range field **(311).** This unicity allows to unambiguously determine the name of any of these two named ranges, based on the name of the other one.
- At step **408**, a test is done to verify that at least one direction has been specified as open during step **403.** If it is the case, then control is given to step **410**; otherwise control is given to step **409.**
- When the step **409** is reached, an existing open named range has been specified as no longer open by the user during the step **403.** Thus some housekeeping must be done in the Open Table by deleting the record found during the step **404**. Afterwards control is given back to step **401** for waiting for any further Open_Range command
- At step **410,** the Range Openess Direction field **(313)** is filled according to the directions declared by the user as open during the step **403.** In a preferred embodiment of the present invention, this corresponds to set to a Boolean value (true or false) each of the six sub-fields corresponding to each of the six directions of a 3D spreadsheet.
- At step **411,** the last field of the record **310** is filled: it is the Hidden Range Address field **315.** This address is derived from the User Range Address field **312** by expanding this range address definition by one position in every direction specified as open. At the end of the step **408**, the Open_Range command is over, and control is given back to step **401** for processing any further new command.

### F. Update_Open_Range method

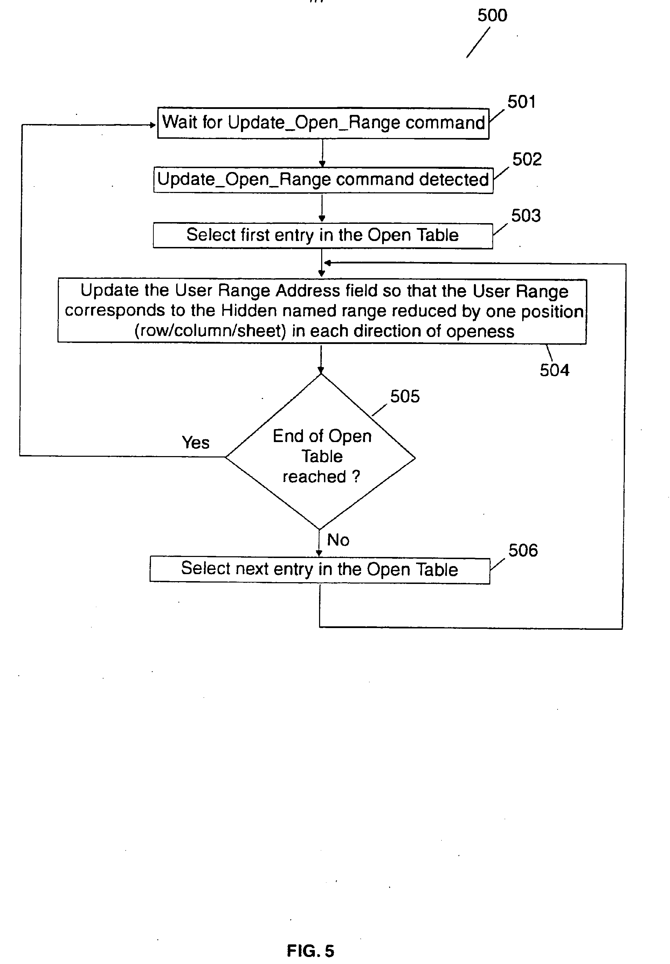

The method according to the present invention for updating an open named range upon the introduction of new elements such as rows, columns and sheets is summarized in flowchart **500** of FIG **5**. This method can be seen as an extension of the conventional methods which are applied to conventional closed named ranges, and which only update named ranges when introducing elements located within other ones already pertaining to the named range. The method comprises the following steps :
- At step **501**, the method is in its default state, waiting for an event to initiate the following process.
- At step **502**, the event is detected, as a result of a call to the routine implementing the Update_Open_Range method, when the conventional routines updating the conventional ranges upon the introduction of new elements in the spreadsheet are over.
- At step **503,** the first record **310** of the Open_Table is selected and becomes the current record.
- At step **504**, the second field of the record **310** is filled: it is the User Range Address field **312**. This address is derived from the Hidden Range Address field **315** by reducing this range address definition by one position in every direction specified as open.
- At step **505**, a test is performed to check if the end of the Open_Table has been reached. If it is the case, then control is given to step **501** for waiting for a new Update_Open_Range command. Otherwise, control is given to step **506.**
- At step **506**, the next entry in the Open_Table is selected so that the current record becomes the one following the previous one. Then control is given back to step **504** for processing the new current record.

### ALTERNATE EMBODIMENTS

While the invention has been particularly shown and described with reference to a preferred embodiment, it will be understood that various changes in form and detail may be made therein without departing from the spirit, and scope of the invention.

For instance, the improved named range management method and system according to the present invention may be used advantageously in those environments where elements of information are organised as multidimensional tables having more than three dimensions.

An improvement of the present invention would consist in defining some "openness templates" corresponding to a given pattern of open directions. When the user defines the directions along which a given named range must be opened (as part of the step **403**), he or she could simply specify to apply a defined openness template rather than specifying for each direction if it is open or not.

## Claims

1. A method of processing a named range defined by a cell address range in a spreadsheet comprising a plurality of cells identified in each dimension by an address, each dimension comprising two directions, said method comprising the steps of:
• defining an open named range by specifying to the named range one or a plurality of open directions;
• defining a hidden named range with the cell address range of the open named range expanded by one address in every direction specified as open;
In response to the introduction of a new element to the hidden range:
• selecting one or a plurality of directions;
• increasing the cell address range of the hidden named range by inserting between two consecutive cell addresses, a new address in selected directions;
• updating the open named range with the cell address range of the hidden named range shortened by one address in every direction specified as open.

2. The method according to the preceding claim wherein the step of specifying one or a plurality of open directions comprises the step of:
• specifying:
• a right or/and a left direction along a row axis, and/or
• an up or/and a down direction along a column axis, and/or
• a forward or/and a backward direction along a sheet axis.

3. The method according to any one of the preceding claims comprising the further step of:
• associating with the open named range a table comprising:
• a name for the open named range;
• a cell address range for the open named range;
• an identification of open directions;
• a name for the hidden named range;
• a cell address range for the hidden named range.
• maintaining said table each time the open named range is updated.

4. The method according to any one of the preceding claims comprising the further step of:
• closing in the open named range one or a plurality of directions previously open.

5. The method according to any one of the preceding claims wherein the steps of defining an open named range, and/or of closing one or a plurality of directions, comprises the further step of:
• modifying one or a plurality of display attributes attached to said open named range, said attributes comprising preferably colour, font, background colour, ....

6. A system, in particular a spreadsheet, comprising means adapted for carrying out the method according to any one of the preceding claims.

7. A computer readable medium comprising instructions adapted for carrying out the method according to claims 1 to 5.

## Patentansprüche

1. Verfahren zum Verarbeiten eines mit Namen versehenen Zellenbereichs, der von einem Zellen-Adressbereich in einem Tabellenblatt festgelegt wird, das einer Vielzahl von in jeder Dimension durch eine Adresse bezeichnete Zellen umfasst, wobei jede Dimension zwei Richtungen umfasst und das Verfahren die folgenden Schritte umfasst:
- das Festlegen eines offenen mit Namen versehenen Bereichs durch das Angeben einer oder mehrerer offener Richtungen für den mit Namen versehenen Bereich
- das Festlegen eines verborgenen mit Namen versehenen Bereichs mit dem Zellen-Adressbereich des offenen mit Namen versehenen Bereichs, der in jeder als offen angegebenen Richtung um eine Adresse erweitert wurde;
In Reaktion auf das Einfügen eines neuen Elements zu dem verborgenen Bereich:
- das Auswählen einer oder einer Vielzahl von Richtungen;
- das Erweitern des Zellen-Adressbereichs des verborgenen mit Namen versehenen Bereichs durch das Einfügen einer neuen Adresse in ausgewählten Richtungen zwischen zwei aufeinander folgenden Zellenadressen;
- das Aktualisieren des offenen mit Namen versehenen Bereichs mit dem Zellen-Adressbereich des verborgenen mit Namen versehenen Bereichs, der in jede als offen angegebene Richtung um eine Adresse verkürzt wurde.

2. Verfahren nach dem vorangehenden Anspruch, wobei der Schritt des Festlegens einer oder einer Vielzahl offener Richtungen den folgenden Schritt umfasst:
- das Festlegen:
- einer rechten und/oder linken Richtung längs einer Zeilenachse und/oder
- einer oberen und/oder unteren Richtung längs einer Spaltenachse und/oder
- einer Vorwärts- und/oder Rückwärtsrichtung längs einer Tabellenachse.

3. Verfahren nach einem der vorangehenden Ansprüche, das den folgenden weiteren Schritt umfasst:
- das Verknüpfen des offenen mit Namen versehenen Bereichs mit einer Tabelle, die das Folgende umfasst:
- einen Namen für den offenen mit Namen versehenen Bereich;
- einen Zellen-Adressbereich für den offenen mit Namen versehenen Bereich;
- eine Bezeichnung der offenen Richtungen;
- einen Namen für den verborgenen mit Namen versehenen Bereich;
- einen Zellen-Adressbereich für den verborgenen mit Namen versehenen Bereich.
- das Aktualisieren der Tabelle jedes Mal, wenn der offene genannte Bereich aktualisiert wird.

4. Verfahren nach einem der vorangehenden Ansprüche, das den folgenden weiteren Schritt umfasst:
- das Schließen einer oder einer Vielzahl vorher offener Richtungen in dem offenen mit Namen versehenen Bereich.

5. Verfahren nach einem der vorangehenden Ansprüche, wobei die Schritte des Festlegens eines offenen mit Namen versehenen Bereichs und/oder Schließens einer oder einer Vielzahl von Richtungen den folgenden weiteren Schritt umfasst:
- das Verändern einer oder einer Vielzahl von Anzeigeattributen, die mit dem offenen mit Namen versehenen Bereich verknüpft sind, wobei die Attribute vorzugsweise die Farbe, Schrift, Hintergrundfarbe usw. umfassen.

6. System, insbesondere ein Tabellenblatt, das ein zum Durchführen des Verfahrens nach irgendeinem der vorangehenden Ansprüche geeignetes Mittel umfasst.

7. Computerlesbares Medium, das geeignete Befehle zum Durchführen des Verfahrens nach den Ansprüchen 1 bis 5 umfasst.

## Revendications

1. Un procédé de traitement d'une région désignée, définie par une plage d'adresses de cellules dans un tableur comprenant une pluralité de cellules, identifiées dans chaque dimension par une adresse, chaque dimension comprenant deux directions, ledit procédé comprenant les étapes consistant à :
• définir une région désignée ouverte, en spécifiant à la région spécifiée une ou une pluralité de directions ouvertes ;
• définir une région spécifiée cachée, avec la plage d'adresses de cellules de la région désignée ouverte élargie d'une adresse dans chaque direction désignée comme ouverte ;
en réponse à l'introduction d'un nouvel élément à la région cachée :
• sélectionner une ou une pluralité de directions ;
• augmenter la plage d'adresses de cellules de la région spécifiée cachée, par insertion, entre deux adresses de cellule consécutives, d'une nouvelle adresse dans des directions sélectionnées ;
• mettre à jour la région désignée ouverte avec la plage d'adresses de cellules de la région spécifiée cachée, raccourcie d'une adresse dans chaque direction spécifiée comme ouverte.

2. Le procédé selon la revendication précédente, dans lequel l'étape de spécification d'une ou d'une pluralité de directions ouvertes comprend l'étape consistant à :
• spécifier :
• une direction de gauche ou de droite, le long d'un axe de ligne, et/ou
• une direction de montée ou de descente, le long d'un axe de colonne, et/ou
• une direction avant et/ou arrière, le long d'un axe de feuille.

3. Le procédé selon l'une quelconque des revendications précédentes, comprenant l'étape supplémentaire, consistant à :
• associer à la région spécifiée ouverte une table, comprenant :
• un nom, pour la région spécifiée ouverte ;
• une plage d'adresses de cellules pour la région spécifiée ouverte ;
• une identification des directions ouvertes ,
• un nom, pour la région spécifiée cachée ;
• une plage d'adresses de cellules pour la région spécifiée cachée.
• maintenir ladite table chaque fois que la région spécifiée ouverte est mise à jour.

4. Le procédé selon l'une quelconque des revendications précédentes, comprenant l'étape supplémentaire, consistant à :
• fermer, dans la région spécifiée ouverte, une ou une pluralité de directions antérieurement ouvertes.

5. Le procédé selon l'une quelconque des revendications précédentes, dans lequel les étapes de définition d'une région spécifiée ouverte, et/ou de fermeture d'une ou d'une pluralité de directions, comprend l'étape supplémentaire, consistant à :
• modifier un ou une pluralité d'attributs d'affichage attachés à ladite région spécifiée ouverte, lesdits attributs comprenant de préférence la couleur, la police, la couleur d'arrière-plan, ... .

6. Un système, en particulier un tableur, comprenant des moyens, adaptés pour mettre en oeuvre le procédé selon l'une quelconque des revendications précédentes.

7. Un support lisible par ordinateur, comprenant des instructions, adaptées pour mettre en oeuvre le procédé selon les revendications 1 à 5.
